# EUROPEAN PATENT SPECIFICATION

(11) **EP 2 424 414 B1**
(45) Date of publication and mention of the grant of the patent: **13.03.2013**
(21) Application number: 10727827.7
(22) Date of filing: 27.04.2010
(51) Int. Cl.: A47J 42/40, A47J 42/50, A47J 31/36

(54) **BEVERAGE-MAKING METHOD**
GETRÄNKEZUBEREITUNGSVERFAHREN
PROCÉDÉ DE FABRICATION DE BOISSON

(30) Priority: 28.04.2009 IT TO20090335
(43) Date of publication of application: 07.03.2012
(73) Proprietor: N&W Global Vending S.p.A., Valbrembo (IT)
(72) Inventor: MAGNO, Alessandro, I-24030 Brembate Sopra (IT)
(74) Representative: Jorio, Paolo
(86) International application number: PCT/IB2010/000933
(87) International publication number: WO 2010/125438

(56) References cited:
- EP-A1- 1 174 065
- WO-A1-98/40000
- WO-A1-2009/007804
- DE-A1-102006 061 221

## Description

### TECHNICAL FIELD

The present invention relates to a beverage-making method.

### BACKGROUND ART

More specifically, the present invention relates to a method of making a beverage, in particular coffee, by means of a brewing assembly and from a powder ground inside a grinding device comprising two grinding units, and fed by a funnel directly into a brewing chamber mounted to oscillate about a horizontal axis.

To make a brewed beverage, the two grinding units are normally used to feed the brewing chamber selectively with powders of different characteristics; and the funnel normally comprises a central cup having two inlets at the top, each connected to a respective grinding unit, and one vertical outflow conduit at the bottom, with one outlet. Alternatively, the central cup, the outflow conduit, and the outlet are divided by a central vertical partition into two separate parts, each communicating with a respective inlet.

When preparing brewed beverages in accordance with the known art, the powder is loaded into the brewing chamber by setting the brewing chamber to a given, normally vertical, loading position, in which an inlet of the brewing chamber is positioned directly beneath the funnel outlet.

This method has several drawbacks, on account of the arrangement of the powder inside the brewing chamber, and therefore the characteristics of the resulting beverage, varying according to the type of funnel and which of the two grinding units is used.

To eliminate this drawback, it has been proposed to insert additional baffle devices between the grinding units and the brewing chamber, to correct the fall path of the powder as required or, as disclosed in EP-A-1 174 065, to provide two different locations at which the brewing chamber may be selectively arranged.

Though successful in achieving an optimum arrangement of the powder inside the brewing chamber, the above solution seriously complicates the design, and so increases the manufacturing cost, of the brewing assembly.

### DISCLOSURE OF INVENTION

It is an object of the present invention to provide a method of making a beverage using a brewing assembly, which method is designed to achieve an optimum arrangement of the powder inside the brewing chamber of the brewing assembly, without complicating the design of the brewing assembly.

According to the present invention, there is provided a beverage-making method as claimed in Claim 1 and preferably in any one of the following Claims depending directly or indirectly on Claim 1.

### BRIEF DESCRIPTION OF THE DRAWINGS

A number of non-limiting embodiments of the invention will be described by way of example with accompanying drawings, in which:
Figures 1 and 2 show axial sections of a first preferred embodiment of a brewing assembly implementing the method according to the present invention and in respective operating positions;
Figures 3 and 4 show axial sections of a second preferred embodiment of a brewing assembly implementing the method according to the present invention and in respective operating positions.

### BEST MODE FOR CARRYING OUT THE INVENTION

Number 1 in the attached drawings indicates as a whole a brewing assembly comprising a brewing device 2 located beneath a grinding device 3 - in the example shown, a device for grinding coffee beans (not shown) into coffee powder for supply to brewing device 2 to make a coffee beverage.

Brewing device 2 is a known type comprising a cup-shaped body 4 having a longitudinal axis 5 and mounted to oscillate about a horizontal axis 6 under the control of an actuating device 7, which comprises a motor 8, and a transmission 9 connecting motor 8 to cup-shaped body 4.

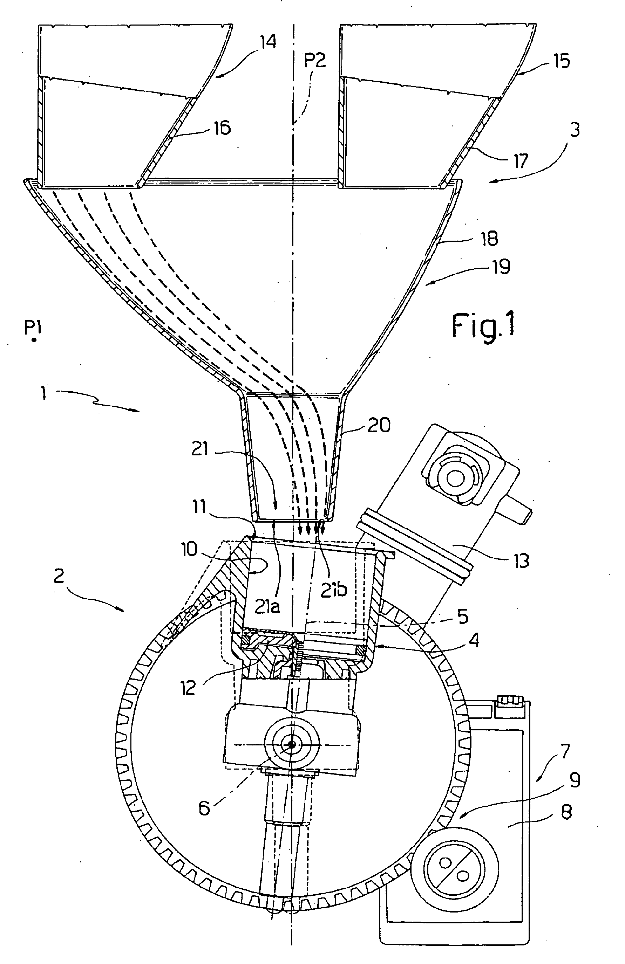

Axis 6 is perpendicular to a plane P1 coincident with the plane of each of Figures 1 to 4, and lies in a vertical plane P2; and cup-shaped body 4 is positioned with its concavity facing upwards, and defines a brewing chamber 10 communicating externally at the top through an inlet 11. Brewing chamber 10 houses an ejector piston 12, which is normally positioned at the bottom of brewing chamber 10, and is movable, by a known control device not shown, towards inlet 11 to expel the powder dregs from brewing chamber 10.

Brewing device 2 also comprises a pressure piston 13 located radially with respect to axis 6, and which is moved axially in known manner to engage inlet 11 when cup-shaped body 4 is moved about axis 6 into a brewing position, in which cup-shaped body 4 is coaxial with pressure piston 13.

The grinding device 3 employed comprises two grinding units 14, 15, which are located side by side in plane P1 and on opposite sides of plane P2, and have respective outflow conduits 16, 17 converging downwards towards plane P2 and connected integrally to a top edge of a cup 18 of a funnel 19. A substantially vertical outflow conduit 20 extends vertically downwards from cup 18 towards brewing device 2, has an axis coincident with the intersection of planes P1 and P2, and has an outlet 21 divided by plane P2 into two portions 21a, 21b, of which portion 21a is located on the same side of plane P2 as outflow conduit 16.

In actual use, grinding unit 14, when activated, dispenses a stream of powdered coffee which flows down cup 18 and, as it enters outflow conduit 20, tends to flow through plane P2 and out through portion 21b of outlet 21. This therefore makes portion 21b the "active portion" of outlet 21 as regards grinding unit 14, and, by the same principle, makes portion 21a the "active portion" of outlet 21 as regards grinding unit 15.

When brewing assembly 1 is set to make a coffee (or other brewed beverage), brewing device 2 is normally set to a standby position with longitudinal axis 5 of cup-shaped body 4 coincident with the intersection of planes P1 and P2, and either one of grinding units 14, 15 is activated to produce powdered coffee for supply to brewing chamber 10.

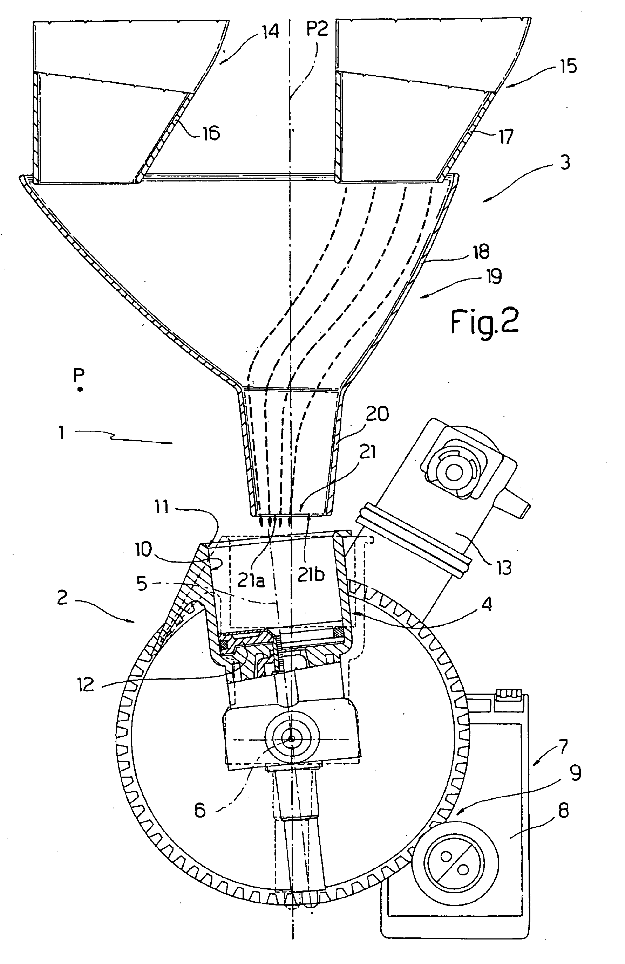

The grinding unit used can be selected on the basis of several criteria, but is normally a question of user choice if the two grinding units contain coffee beans of different types and/or grind the beans differently. Whichever the case, once the choice is made, actuating device 7 is operated to rotate cup-shaped body 4 about axis 6 towards active portion 21b (Figure 1) or 21a (Figure 2) of the chosen grinding unit 14 or 15. The degree of rotation is preferably such as to keep outlet 21 directly and completely over inlet 11 of brewing chamber 10.

The powder flow, which would otherwise hit the lateral surface, and accumulate to one side, of brewing chamber 10, thus drops straight to the bottom and is distributed more evenly inside brewing chamber 10.

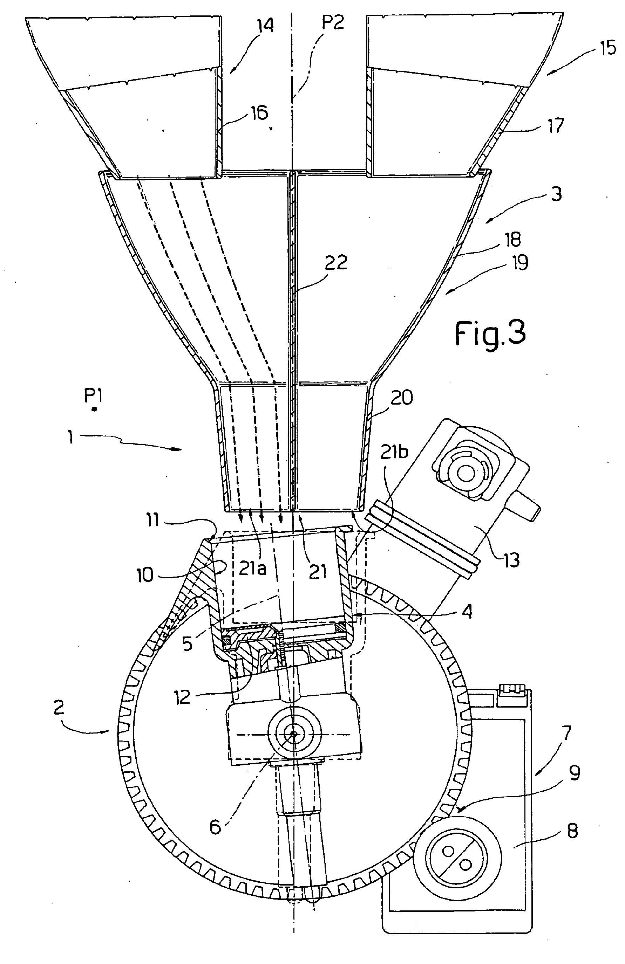

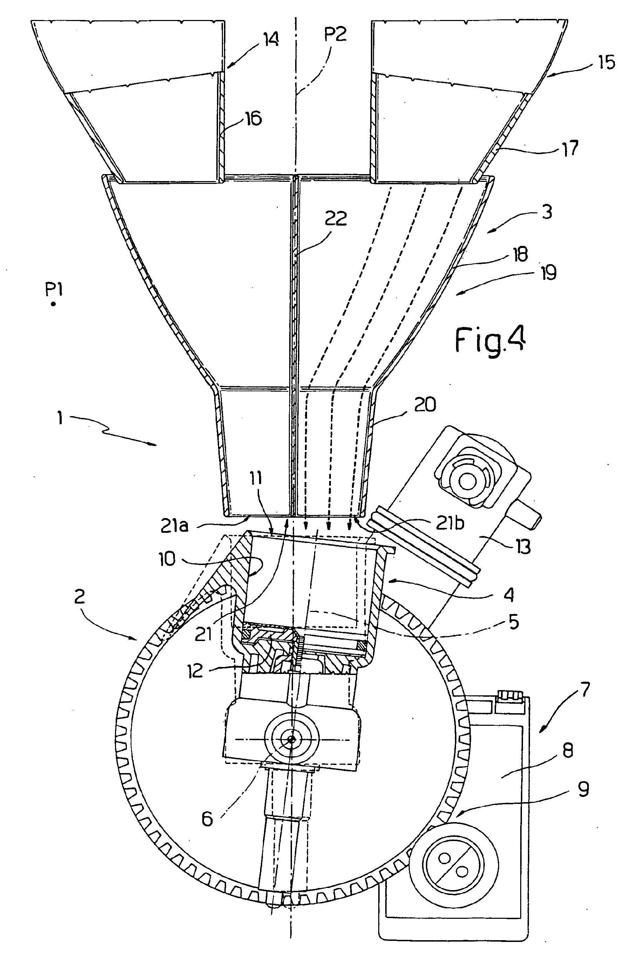

In the Figure 3 and 4 variation, portions 21a and 21b are physically defined by a partition 22 lying in plane P2 and extending the full height of funnel 19. In which case, since the powder can no longer flow through plane P2, portion 21a is the "active portion" of outlet 21 as regards grinding unit 14, and portion 21b the "active portion" of outlet 21 as regards grinding unit 15, so inlet 11 of cup-shaped body 4 is moved towards portion 21a when activating grinding unit 14, and towards portion 21b when activating grinding unit 15.

In both the embodiments shown, cup-shaped body 4 is moved by rotating it about axis 6, but the same result may obviously be achieved by not rotating cup-shaped body 4 at all, and by moving the whole of brewing device 2 in either direction parallel to plane P1.

## Claims

1. A beverage-making method, in particular for making coffee, the method comprising :
- providing a brewing assembly (1), wherein a brewing chamber (10) has an inlet (11) located beneath and facing an outlet (21) of a funnel (19) of a grinding device (3) having a number of grinding units (14, 15); and
- selectively activating the grinding units (14, 15) to feed a powder to the brewing chamber (10) through respective active portions (21a, 21b) of the outlet (21);
the method being **characterized by** also imparting to the brewing chamber (10), prior to the powder being dispensed by one of the grinding units (14, 15), a given rotation about a horizontal axis (6) of rotation towards the corresponding active portion (21a; 21b) of the outlet (21).

2. A method as claimed in Claim 1, and which also comprises employing two grinding units (14, 15) located side by side in a first vertical plane (P1) and on opposite sides of a second vertical plane (P2) perpendicular to the first plane (P1) and dividing the outlet (21) into two portions (21a, 21b), each of which is the active portion (21a; 21b) of a respective said grinding unit (14; 15); said rotation being a rotation in the first plane (P1).

3. A method as claimed in Claim 2, wherein the axis (6) of rotation lies in the second plane (P2).

4. A method as claimed in Claim 2 or 3, wherein each grinding unit (14; 15) and the relative active portion (21a; 21b) of the outlet (21) are located on opposite sides of the second plane (P2).

5. A method as claimed in Claim 2 or 3, wherein the funnel (19) comprises a central partition (22) lying in the second plane (P2); each grinding unit (14; 15) and the relative active portion (21a; 21b) of the outlet (21) being located on the same side of the second plane (P2).

6. A method as claimed in one of the foregoing Claims, wherein the rotation imparted to the brewing chamber (10) is of such an extent as to keep the outlet (21) directly and completely over the inlet (11) of the brewing chamber (10).

## Patentansprüche

1. Getränkezubereitungsverfahren, insbesondere für das Zubereiten von Kaffee, wobei das Verfahren umfasst:
- Bereitstellen einer Aufbrühbaugruppe (1), in welcher eine Aufbrühkammer (10) einen Einlass (11) aufweist, der sich unter und gegenüber von einem Auslass (21) eines Trichters (19) einer Mahlvorrichtung (3) befindet, welche eine Anzahl von Mahleinheiten (14, 15) aufweist; und
- gezieltes Aktivieren der Mahleinheiten (14, 15), um der Aufbrühkammer (10) durch jeweilige aktive Abschnitte (21a, 21b) des Auslasses (21) ein Pulver zuzuführen;
wobei das Verfahren **dadurch gekennzeichnet ist, dass** der Aufbrühkammer (10) auch eine gegebene Drehung um eine horizontale Rotationsachse (6) zu dem entsprechenden aktiven Abschnitt (21a; 21b) des Auslasses (21) verliehen wird, bevor das Pulver durch eine der Mahleinheiten (14, 15) verabreicht wird.

2. Verfahren gemäß Anspruch 1, welches außerdem umfasst, zwei Mahleinheiten (14, 15) zu verwenden, die sich nebeneinander in einer ersten senkrechten Ebene (P1) und auf entgegen gesetzten Seiten einer zweiten senkrechten Ebene (P2) befinden, die im rechten Winkel zu der ersten Ebene (P1) ist und welche den Auslass (21) in zwei Abschnitte (21a, 21b) teilt, deren jeder der aktive Abschnitt (21a; 21b) einer zugehörigen Mahleinheit (14; 15) ist; wobei die Drehung eine Drehung in der ersten Ebene (P1) ist.

3. Verfahren gemäß Anspruch 2, wobei die Rotationsachse (6) in der zweiten Ebene (P2) liegt.

4. Verfahren gemäß Anspruch 2 oder 3, wobei jede Mahleinheit (14; 15) und der betreffende aktive Abschnitt (21a; 21b) des Auslasses (21) sich auf entgegen gesetzten Seiten der zweiten Ebene (P2) befinden.

5. Verfahren gemäß Anspruch 2 oder 3, wobei der Trichter (19) eine mittige Trennwand (22) umfasst, die in der zweiten Ebene (P2) liegt; wobei jede Mahleinheit (14, 15) und der betreffende aktive Abschnitt (21a; 21b) des Auslasses (21) sich auf der gleichen Seite der zweiten Ebene (P2) befinden.

6. Verfahren gemäß irgendeinem der vorhergehenden Ansprüche, wobei die der Aufbrühkammer (10) verliehene Drehung von einem solchen Ausmaß ist, dass der Auslass (21) unmittelbar und vollständig über dem Einlass (11) der Aufbrühkammer (10) gehalten wird.

## Revendications

1. Procédé de fabrication de boissons, en particulier pour faire du café, le procédé comprenant :
- la fourniture d'un ensemble d'infusion (1), où une chambre d'infusion (10) comporte une entrée (11) située en dessous et faisant face à une sortie (21) d'un entonnoir (19) d'un dispositif de mouture (3) comportant un certain nombre d'unités de mouture (14, 15) ; et
- l'activation sélective des unités de mouture (14, 15) afin d'alimenter la chambre d'infusion (10) en poudre par l'intermédiaire de portions actives (21a, 21b) respectives de la sortie (21) ;
le procédé étant **caractérisé en ce qu'**il confère également à la chambre d'infusion (10), avant la distribution de la poudre par une des unités de mouture (14, 15), une rotation donnée autour d'un axe horizontal (6) de rotation vers la portion active (21a ; 21b) correspondante de la sortie (21).

2. Procédé selon la revendication 1, et qui comprend également l'emploi de deux unités de mouture (14, 15) situées côte à côte dans un premier plan vertical (P1) et sur des côtés opposés d'un second plan vertical (P2) perpendiculaire au premier plan (P1) et divisant la sortie (21) en deux portions (21a ; 21b) dont chacune est la portion active (21a ; 21b) d'une dite unité de mouture (14 ; 15) respective ; ladite rotation étant une rotation dans le premier plan (P1).

3. Procédé selon la revendication 2, dans lequel l'axe (6) de rotation se trouve dans le second plan (P2).

4. Procédé selon la revendication 2 ou 3, dans lequel chaque unité de mouture (14 ; 15) et la portion active (21a ; 21b) relative de la sortie (21) sont situées sur des côtés opposés du second plan (P2).

5. Procédé selon la revendication 2 ou 3, dans lequel l'entonnoir (19) comprend une cloison centrale (22) se trouvant dans le second plan (P2) ; chaque unité de mouture (14 ; 15) et la portion active (21a ; 21b) relative de la sortie (21) étant situées sur le même côté du second plan (P2).

6. Procédé selon l'une quelconque des revendications précédentes, dans lequel la rotation conférée à la chambre d'infusion (10) est réalisée au point de maintenir la sortie (21) directement et totalement au-dessus de l'entrée (11) de la chambre d'infusion (10).
